# EUROPÄISCHE PATENTANMELDUNG

(11) **EP 1 129 897 A1**
(43) Veröffentlichungstag der Anmeldung: **05.09.2001**
(21) Anmeldenummer: 00104624.2
(22) Anmeldetag: 03.03.2000
(51) Int. Cl.: B60P 1/44

(54) **Zweifusssteuerung für eine Hubladebühne**

(71) Anmelder: Gerd Bär GmbH, 74078 Heilbronn (DE)
(72) Erfinder: Schmid, Stefan, 74078 Heilbronn (DE)
(74) Vertreter: KOHLER SCHMID + PARTNER

(57) **Zusammenfassung**

Bei einer Zweifußsteuerung für eine Hubladebühne eines Fahrzeugs mit auf der Plattform (2) der Hubladebühne vorgesehenen zwei Fußschaltern (3a, 3b), die zum Heben und Senken der Plattform (2) jeweils in unterschiedlicher Reihenfolge betätigt werden, und mit einer auf der Plattform (2) vorgesehenen Sicherheitseinrichtung zum Verhindern von Fehlbedienungen der Zweifußsteuerung ist als Sicherheitseinrichtung zwischen den beiden Fußschaltern (3a, 3b) mindestens ein Fußsicherheitsschalter (4a; 4b; 14a, 14b; 24) zum Deaktivieren der Zweifußsteuerung vorgesehen. So können die beiden Fußschalter (3a, 3b) voneinander auch um weniger als eine Schuhlänge, vorzugsweise um ca. 22 cm, beabstandet sein.

## Beschreibung

Die Erfindung betrifft eine Zweifußsteuerung für eine Hubladebühne eines Fahrzeugs, mit auf der Plattform der Hubladebühne vorgesehenen zwei Fußschaltern, die zum Heben und Senken der Plattform jeweils in unterschiedlicher Reihenfolge betätigt werden, und mit einer auf der Plattform vorgesehenen Sicherheitseinrichtung zum Verhindern von Fehlbedienungen der Zweifußsteuerung.

Eine derartige Zweifußsteuerung ist beispielsweise durch die DE 198 23 535 A1 bekanntgeworden.

Bei der aus der **DE 198 23 535 A1** bekannten Zweifußsteuerung ist als Sicherheitseinrichtung das Gehäuse zwischen den beiden Fußschaltern zum Heben und Senken der Plattform über die von diesen in ihrer Schaltstellung eingenommene Höhe erhöht. Dadurch ist die Zweifußsteuerung gegen gleichzeitige Betätigung der beiden Fußschalter durch eine auf der Plattform abgestellte Kiste oder Palette zuverlässig geschützt. Allerdings kann die Zweifußsteuerung dann ungewollt ausgelöst werden, wenn auf dem einen Fußschalter eine Last abgestellt ist und dann z.B. die Bedienungsperson den anderen Fußschalter betätigt.

Aus der **DE 31 52 422 A1** ist eine weitere Fußsteuerung mit drei in die Plattform der Hubladebühne eingelassenen Fußschalter bekannt, die alle drei zum Heben und zum Senken dienen. Zum Ausführen einer Bewegung der Plattform ist zunächst die Bewegungsrichtung durch Bedienen entweder des Hebefußschalters oder des Senkfußschalters vorzuwählen, und dann wird durch Betätigen des dritten Fußschalters der Bewegungsvorgang ausgelöst. Die drei Fußschalter sind entweder äquidistant hintereinander angeordnet, oder der dritte Fußschalter ist im Abstand einer Schuhlänge vom nächstbeabstandeten Hebefußschalter entfernt, wobei sich dieser dritte Fußschalter in beiden Varianten nicht zwischen den beiden anderen Fußschaltern befindet. Allerdings kann auch hier die Betätigung der Plattform ungewollt ausgelöst werden, wenn auf dem Hebefußschalter oder auf dem Senkfußschalter eine Last abgestellt ist und dann z.B. die Bedienungsperson den Fußsicherheitsschalter auslöst.

Es sind verschiedene andere Arten von Hubladebühnen-Fußsteuerungen bekannt, bei denen diese Gefahr von Fehlauslösungen reduziert ist.

So offenbart die **DE 29 37 029 C3** eine Hubladebühnen-Fußsteuerung, bei der erst nach einer Doppelbetätigung eines außen liegenden dritten Fußschalters die Betätigung entweder des Fußschalters für die Funktion "Heben" oder des Fußschalters für die Funktion "Senken" erfolgen kann. Der dritte Fußschalter ist, um eine Einfuß-Betätigung zu verhindern, im Abstand von mindestens einer Schuhlänge (ca. 30 cm) von den beiden anderen Fußschaltern entfernt angeordnet.

Auch bei der aus der **DE 76 37 824 U1** bekannten Hubladebühnen-Fußsteuerung ist ein dritter Fußschalter mit einem größeren Abstand gegenüber den anderen beiden Fußschaltern auf der Plattform angeordnet. Dieser Abstand ist so groß, daß sich die beiden auseinanderliegenden Fußschalter nicht mit einem Fuß betätigen lassen. Dadurch ist nur eine beidfüßige Betätigung möglich, wodurch die Sicherheit gegen unabsichtliche Steuervorgänge der Plattform durch Betreten bzw. Überfahren der Fußschalter erhöht wird.

Aus der **DE 68 12 972 U1** ist eine weitere Hubladebühnen-Fußsteuerung mit drei Fußschaltern bekannt, wobei ein Steuervorgang zum Bewegen der Plattform nur eingeleitet wird, wenn jeweils zwei der Schalter gleichzeitig betätigt werden. So ist sichergestellt, daß beim Betreten bzw. Überfahren eines einzigen Fußschalters der Steuervorgang nicht eingeleitet wird.

Aus der **EP 0 080 190 B1,** der **DE 36 25 057 A1** und der **DE 44 30 568 A1** sind jeweils Hubladebühnen-Zweifußsteuerungen mit nur zwei Fußschaltern bekannt, die um mehr als eine Schuhlänge voneinander beabstandet sind. Das Auslösen der Funktionen "Heben" oder "Senken" erfolgt, indem einer der beiden Fußschalter zweimal kurz hintereinander betätigt und dann festgehalten wird und dann der andere Fußschalter ebenfalls betätigt und festgehalten wird.

Und schließlich ist aus der **DE 32 16 398 A1** noch eine Hubladebühnen-Fußsteuerung mit vier Fußschaltern bekannt, von denen zum Heben oder Senken der Plattform jeweils zwei unterschiedliche Fußschalter zu betätigen sind. Durch wechselweise Anordnung der jeweils unterschiedlichen Fußschalter wird eine Betätigung durch eine auf der Plattform abgestellte Last weitgehend vermieden.

Es ist die Aufgabe der Erfindung, bei einer Zweifußsteuerung der eingangs genannten Art die Gefahr einer ungewollten Auslösung der Funktionen "Heben" oder "Senken" noch weiter zu reduzieren.

Diese Aufgabe wird erfindungsgemäß dadurch gelöst, daß als Sicherheitseinrichtung zwischen den beiden Fußschaltern mindestens ein Fußsicherheitsschalter zum Deaktivieren der Zweifußsteuerung vorgesehen ist.

Der mit der Erfindung erzielte Vorteil besteht darin, daß bei einer ungewollter Betätigung eines der beiden Fußschalter mit hoher Wahrscheinlichkeit auch der mindestens eine Fußsicherheitsschalter ausgelöst und die Zweifußsteuerung dadurch deaktiviert wird. Je näher der Fußsicherheitsschalter zum nächstliegenden Fußschalter angeordnet ist, desto geringer ist die Gefahr von Fehlbedienungen.

Bei besonders bevorzugten Ausführungsformen der Erfindung sind zwischen den beiden Fußschaltern zwei Fußsicherheitsschalter vorgesehen, die voneinander weiter als zum jeweils nächstbenachbarten Fußschalter beabstandet sind. Durch diese Maßnahme ist jedem Fußschalter jeweils ein Fußsicherheitsschalter zugeordnet. Sofern ein Fußschalter ungewollt betätigt wird, wird mit hoher Wahrscheinlichkeit zumindest auch der nächstbeabstandete Fußsicherheitsschalter mitausgelöst.

Je näher der Fußsicherheitsschalter zu einem Fußschalter beabstandet ist, desto geringer ist das Risiko einer Fehlbetätigung der Plattform. Vorzugsweise ist jeder Fußsicherheitsschalter zum jeweils nächstbenachbarten Fußschalter um weniger als 5 cm, vorzugsweise um weniger als 3 cm beabstandet. Insbesondere sind Fußschalter und Fußsicherheitsschalter jeweils um nicht weiter als die Länge eines normalen Schuhabsatzes voneinander beabstandet.

Während bei bekannten Hubladebühnen-Fußsteuerungen die Fußschalter zur Vermeidung einer Fehlbetätigung voneinander um mehr als eine Schuhlänge beabstandet sind, können bei besonders bevorzugten Ausführungsformen der Erfindung die beiden Fußschalter voneinander um weniger als eine Schuhlänge, vorzugsweise um ca. 22 cm, beabstandet sein. Zwar lassen sich dann die beiden Fußschalter auch mit nur einem Fuß betätigen, jedoch wird dabei stets auch der mindestens eine Fußsicherheitsschalter betätigt, so daß eine Betätigung der Plattform nicht erfolgt.

Bei zwei Fußsicherheitsschaltern sind diese vorzugsweise voneinander weiter beabstandet als der Absatz von der Sohle bei einem normalen Schuh. Durch diese Maßnahme ist sichergestellt, daß bei einer Einfuß-Betätigung der beiden Fußschalter beide Fußsicherheitsschalter betätigt werden. Bei bevorzugten Ausführungen der Erfindung sind die beiden Fußsicherheitsschalter voneinander um ca. 10 cm beabstandet.

Die beiden Fußschalter und der mindestens eine Fußsicherheitsschalter, die aus Kostengründen bevorzugt jeweils identisch ausgebildete Druckschalter sind, sind möglichst auf einer geraden Verbindungslinie auf der Plattform angeordnet. Es ist aber auch möglich, die beiden Fußsicherheitsschalter im Abstand von der durch die beiden Fußschalter definierten Verbindungsgeraden anzuordnen.

Alle Schalter können in entsprechenden Ausnehmungen der Plattform eingelassen sein. Bei bevorzugten Ausführungsformen der Erfindung sind die beiden Fußschalter und der mindestens eine Fußsicherheitsschalter jedoch in einem Gehäuse vorgesehen, das auf der ebenen Oberfläche der Plattform befestigbar ist. Dazu können im Gehäuse, vorzugsweise jeweils zwischen jedem Fußschalter und seinem nächstbenachbarten Fußsicherheitsschalter, Befestigungslöcher vorgesehen sein.

Das Gehäuse ist so flach wie möglich, damit eine Person auf der Plattform nicht stolpert. Die Höhe des Gehäuses ist möglichst kleiner als 10 mm und beträgt vorzugsweise nur ca. 5 mm. Das Gehäuses kann ein Zinkdruckgußteil sein oder auch aus glasfaserverstärktem Kunststoff gebildet sein.

Auch die Schalterköpfe der beiden Fußschalter und des mindestens einen Fußsicherheitsschalters sollten so flach wie möglich sein, um eine Stolpergefahr möglichst auszuschließen, aber doch ausreichend weit über das Gehäuse für eine Fußbetätigung vorstehen. Bevorzugt stehen die Schalterköpfe der beiden Fußschalter und des mindestens einen Fußsicherheitsschalters im nichtbetätigten Zustand jeweils um weniger als 3 mm, vorzugsweise jeweils nur um ca. 1,5 mm, über das Gehäuse über.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigt:
- Fig. 1: eine Draufsicht auf das Gehäuse eines ersten Ausführungsbeispiels einer erfindungsgemäßen Zweifußsteuerung;
- Fig. 2: eine Seitenansicht des in Fig. 1 gezeigten Gehäuses, welches auf der Plattform einer Hubladebühne befestigt ist;
- Fig. 3: eine Draufsicht auf das Gehäuse eines zweiten Ausführungsbeispiels einer erfindungsgemäßen Zweifußsteuerung;
- Fig. 4: eine Seitenansicht des in Fig. 3 gezeigten Gehäuses, welches auf der Plattform einer Hubladebühne befestigt ist;
- Fig. 5: eine Draufsicht auf das Gehäuse eines dritten Ausführungsbeispiels einer erfindungsgemäßen Zweifußsteuerung; und
- Fig. 6: eine Seitenansicht des in Fig. 5 gezeigten Gehäuses, welches auf der Plattform einer Hubladebühne befestigt ist.

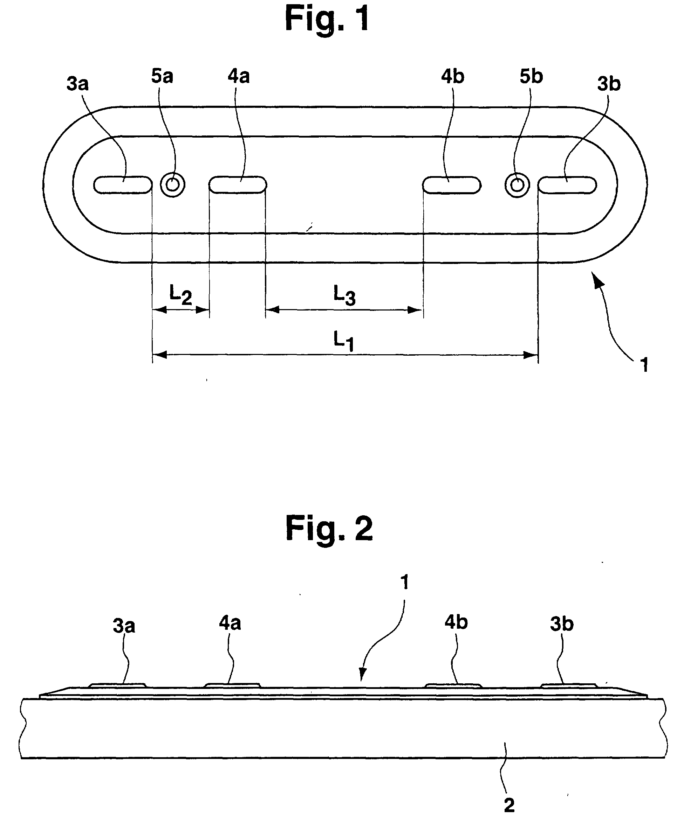

In **Fig. 1** ist das flache Gehäuse **1** einer Zweifußsteuerung für die Hubladebühne eines Fahrzeugs gezeigt. Wie **Fig. 2** zeigt, wird das Gehäuse 1 auf der Plattform **2** der Hubladebühne flach aufliegend befestigt. In dem Gehäuse 1 sind zwei Fußschalter **3a, 3b** und zwei Fußsicherheitsschalter **4a, 4b** untergebracht, die im dargestellten nichtbetätigten Zustand mit ihren Schalterköpfen jeweils nach oben aus dem Gehäuse 1 hochstehen. Die Fußschalter 3a, 3b und Fußsicherheitsschalter 4a, 4b sind als Druckschalter ausgebildet, wobei die beiden Fußschalter 3a, 3b von einer auf der Plattform 1 stehenden Person zur Steuerung der Hub- und Senkbewegung der Plattform 2 niedergedrückt werden. Im Gehäuse 1 sind noch zwei Befestigungslöcher **5a, 5b** vorgesehen, mittels denen das Gehäuse 1 auf der Plattform 2 aufgeschraubt wird.

Die Betätigung der beiden Fußschalter 3a, 3b erfolgt jeweils mit den beiden Schuhabsätzen einer auf der Plattform 2 stehenden Person, wobei die Reihenfolge der Betätigung entscheidend ist.

Um die Funktion "Heben" auszulösen, wird zuerst der eine Fußschalter, z.B. der linke Fußschalter 3a, gedrückt und gehalten und danach der Fußschalter 3b gedrückt und gehalten. Um die Funktion "Senken" auszulösen, wird zuerst der rechte Fußschalter 3b gedrückt und gehalten und danach der Fußschalter 3a gedrückt und gehalten. Verstreicht zwischen der Betätigung der beiden Fußschalter 3a und 3b mehr als eine vorbestimmte Zeitspanne (z.B. 15 Sekunden), muß die Betätigungsreihenfolge erneut von Beginn an ausgelöst werden. Wird während der Funktion Senken einer der beiden Fußschalter 3a oder 3b nicht mehr gedrückt, wird die Funktion unterbrochen, bis der entsprechende Fußschalter wieder betätigt wird (sogenannter Tippbetrieb).

Die beiden Fußsicherheitsschalter 4a, 4b sind reine Sicherheitsschalter, die sowohl eine Einfuß-Betätigung als auch die Auslösung einer Fehlschaltung durch Abstellen einer Palette auf dem Gehäuse 1 verhindern. Sobald mindestens einer der beiden Fußsicherheitsschalter 4a, 4b betätigt wird, kann von den Fußschaltern 3a oder 3b keine Funktion mehr ausgelöst werden, oder eine bereits ausgelöste Funktion wird unterbrochen, d.h., die Zweifußsteuerung ist deaktiviert. Wird der betätigte Fußsicherheitsschalter wieder gelöst, so können die Funktionen wieder ausgeführt werden, d.h., die Fußsteuerung ist wieder aktiviert. Die Fußsicherheitsschalter 4a, 4b sind somit passive Sicherheitsschalter, die zum Heben und Senken der Plattform nicht zu betätigen sind.

Die beiden zwischen den Fußschaltern 3a, 3b angeordneten Fußsicherheitsschalter 4a, 4b sollen verhindern, daß z.B. durch eine auf dem Gehäuse 1 abgestellte Palette oder durch eine Betätigung mit nur einem Fuß eine Funktion (Heben oder Senken) ausgelöst werden kann. Der Abstand L₁ zwischen beiden Fußschaltern 3a und 3b ist im gezeigten Ausführungsbeispiel kleiner als eine Schuhlänge, aber die beiden Fußsicherheitsschalter 4a, 4b sind jeweils in einem solch geringen Abstand L₂ zu den Fußschaltern 3a, 3b angeordnet, daß bei einer versuchten Einfuß-Betätigung stets auch mindestens einer der Fußsicherheitsschalter 4a, 4b betätigt und damit die Fußsteuerung deaktiviert wird. Der Abstand L₂ ist möglichst kleiner als die Länge eines normalen Schuhabsatzes, so daß bei einer versuchten Einfuß-Betätigung ein Fußschalter und sein Fußsicherheitsschalter mit dem Schuhabsatz betätigt werden. Der Abstand L₃ zwischen den beiden Fußsicherheitsschaltern 4a, 4b ist möglichst größer als der Abstand von Absatz zu Sohle bei einem normalen Schuh, wodurch bei einer versuchten Einfuß-Betätigung stets auch beide Fußsicherheitsschalter 4a, 4b betätigt werden.

Im Ausführungsbeispiel der Fign. 1 und 2 beträgt L₁ ca. 22 cm, L₂ ca. 3 cm und L₃ ca. 10 cm. Die Höhe des Gehäuses 1 beträgt nur ca. 5 mm, wobei die Schalterköpfe im nichtbetätigten Zustand jeweils um nur ca. 1,5 mm über das Gehäuse 1 nach oben überstehen.

Die durch die einzelnen Schalter ausgelösten Signale werden über eine trennbare Leitungsverbindung an eine Steuerelektronik geleitet, von dieser in ein eindeutiges Heben- oder Senken-Signal umgewandelt und an die Zentralelektrik der Hubladebühne weitergeleitet. Die Steuerelektronik der Zweifußsteuerung kann z.B. in einem Hohlfach der Plattform 2 untergebracht sein und auch einen Blinkgeber für an der Plattform 2 angeordnete Blinkleuchten sowie einen Lagesensor zum Erfassen des jeweiligen Neigungswinkels der Plattform 2 beinhalten.

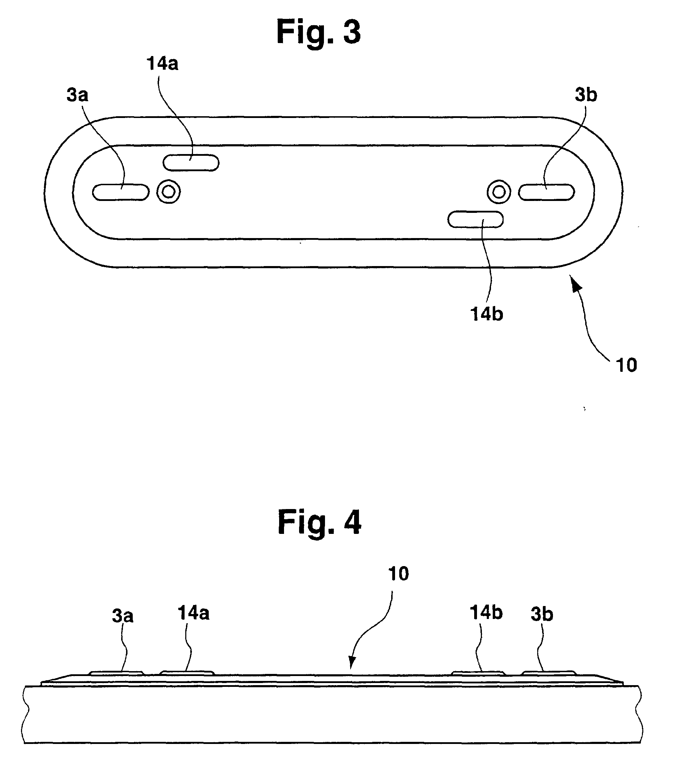

In den **Fign. 3 und 4** ist das Gehäuse **10** eines zweiten Ausführungsbeispiels einer Zweifußsteuerung gezeigt. Die beiden Fußsicherheitsschalter **14a, 14b** sind zwischen den beiden Fußschalter 3a, 3b, aber seitlich versetzt zu der durch die beiden Fußschalter 3a, 3b definierten Verbindungslinie angeordnet.

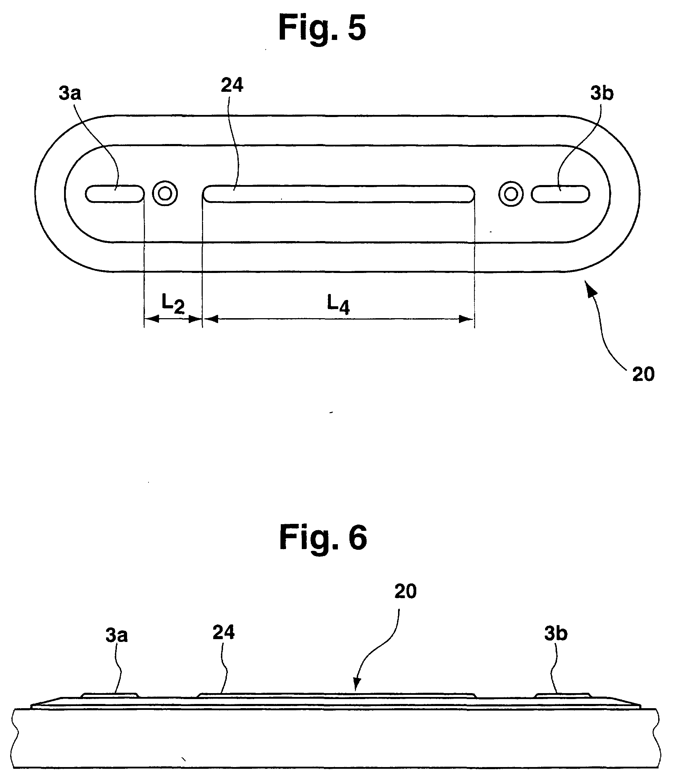

Die **Fign. 5 und 6** zeigen das Gehäuse **20** eines dritten Ausführungsbeispiels einer Zweifußsteuerung. Zwischen den beiden Fußschalter 3a, 3b ist mittig ein einziger Fußsicherheitsschalter **24** angeordnet Der jeweilige Abstand L₂ des Fußsicherheitsschalters 24 zu den beiden Fußschaltern 3a, 3b ist möglichst kleiner als die Länge eines normalen Schuhabsatzes, so daß bei einer versuchten Einfuß-Betätigung mindestens einer der Fußschalter 3a, 3b und der Fußsicherheitsschalter 24 mit dem Schuhabsatz betätigt werden. Im Ausführungsbeispiel der Fign. 5 und 6 beträgt L₂ ca. 3 cm und L₄ ca. 15 cm.

## Patentansprüche

1. Zweifußsteuerung für eine Hubladebühne eines Fahrzeugs, mit auf der Plattform (2) der Hubladebühne vorgesehenen zwei Fußschaltern (3a, 3b), die zum Heben und Senken der Plattform (2) jeweils in unterschiedlicher Reihenfolge betätigt werden, und mit einer auf der Plattform (2) vorgesehenen Sicherheitseinrichtung zum Verhindern von Fehlbedienungen der Zweifußsteuerung,
**dadurch gekennzeichnet**,
daß als Sicherheitseinrichtung zwischen den beiden Fußschaltern (3a, 3b) mindestens ein Fußsicherheitsschalter (4a; 4b; 14a, 14b; 24) zum Deaktivieren der Zweifußsteuerung vorgesehen ist.

2. Zweifußsteuerung nach Anspruch 1, **dadurch gekennzeichnet**, daß zwischen den beiden Fußschaltern (3a, 3b) zwei Fußsicherheitsschalter (4a, 4b; 14a, 14b) vorgesehen sind, die voneinander weiter als zum jeweils nächstbenachbarten Fußschalter (3a, 3b) beabstandet sind.

3. Zweifußsteuerung nach Anspruch 1 oder 2, **dadurch gekennzeichnet**, daß jeder Fußsicherheitsschalter (4a, 4b; 14a, 14b; 24) zum jeweils nächstbenachbarten Fußschalter (3a, 3b) um weniger als 5 cm, vorzugsweise um weniger als 3 cm beabstandet ist.

4. Zweifußsteuerung nach einem der vorhergehenden Ansprüche, **dadurch gekennzeichnet**, daß die beiden Fußschalter (3a, 3b) voneinander um weniger als eine Schuhlänge, vorzugsweise um ca. 22 cm, beabstandet sind.

5. Zweifußsteuerung nach einem der Ansprüche 2 bis 4, **dadurch gekennzeichnet**, daß die beiden Fußsicherheitsschalter (4a, 4b; 14a, 14b) voneinander weiter beabstandet sind als der Absatz von der Sohle bei einem normalen Schuh, vorzugsweise um ca. 10 cm.

6. Zweifußsteuerung nach einem der vorhergehenden Ansprüche, **dadurch gekennzeichnet**, daß die beiden Fußschalter (3a, 3b) und der mindestens eine Fußsicherheitsschalter (4a, 4b; 14a, 14b) jeweils identisch ausgebildete Druckschalter sind.

7. Zweifußsteuerung nach einem der vorhergehenden Ansprüche, **dadurch gekennzeichnet**, daß die beiden Fußschalter (3a, 3b) und der mindestens eine Fußsicherheitsschalter (4a, 4b; 24) auf einer geraden Verbindungslinie angeordnet sind.

8. Zweifußsteuerung nach einem der vorhergehenden Ansprüche, **dadurch gekennzeichnet**, daß die beiden Fußschalter (3a, 3b) und der mindestens eine Fußsicherheitsschalter (4a, 4b; 14a, 14b; 24) in einem Gehäuse (1; 10; 20) vorgesehen sind, das auf der ebenen Oberfläche der Plattform (2) befestigt ist.

9. Zweifußsteuerung nach Anspruch 8, **dadurch gekennzeichnet**, daß im Gehäuse (1; 10; 20) jeweils zwischen Fußschalter (3a; 3b) und nächstbenachbartem Fußsicherheitsschalter (4a; 4b; 24) Befestigungslöcher (5a; 5b) vorgesehen sind.

10. Zweifußsteuerung nach Anspruch 8 oder 9, **dadurch gekennzeichnet**, daß die Höhe des Gehäuses (1; 10; 20) kleiner als 10 mm ist, vorzugsweise ca. 5 mm beträgt.

11. Zweifußsteuerung nach einem der Ansprüche 8 bis 10, **dadurch gekennzeichnet**, daß die Schalterköpfe der beiden Fußschalter (3a, 3b) und des mindestens einen Fußsicherheitsschalters (4a, 4b; 14a, 14b; 24) im nichtbetätigten Zustand jeweils um weniger als 3 mm, vorzugsweise jeweils um 1,5 mm, über das Gehäuse (1; 10; 20) überstehen.
